Europäisches Patentamt

**European Patent Office**

Office européen des brevets

(19)

(11) Numéro de publication : **0 048 659**
**B1**

(12)                    **FASCICULE DE BREVET EUROPÉEN**

(45) Date de publication du fascicule du brevet :
**24.04.85**

(21) Numéro de dépôt : **81401409.8**

(22) Date de dépôt : **10.09.81**

(51) Int. Cl.⁴ : **B 62 D 21/18**, B 62 D 31/00,
B 62 D 61/08, B 60 G 25/00,
B 62 D 33/06

(54) **Véhicule terrestre à coque suspendue.**

(30) Priorité : **19.09.80 FR 8020243**

(43) Date de publication de la demande :
**31.03.82 Bulletin 82/13**

(45) Mention de la délivrance du brevet :
**24.04.85 Bulletin 85/17**

(84) Etats contractants désignés :
**AT BE CH DE GB IT LI LU NL SE**

(56) Documents cités :
FR-A- 573 590
FR-A- 574 130
FR-A- 621 935
FR-A- 1 194 971
FR-A- 2 456 263
FR-E- 31 863
US-A- 2 639 186

(73) Titulaire : **SOCIETE D'EXPLOITATION DES
RESSORTS AUTO-AMORTISSEURS JARRET**
**Société Anonyme dite :**
**15 rue Godot-de-Mauroy**
**F-75009 Paris (FR)**

(72) Inventeur : **Jarret, Jean**
**La Capelière**
**F-83880 Meounes-Les-Montrieux (FR)**
Inventeur : **Jarret, Jacques**
**32, Allée des Soudanes**
**F-78430 Louveciennes (FR)**

(74) Mandataire : **Robert, Jean-Pierre et al**
**CABINET BEAU DE LOMENIE 55, rue d'Amsterdam**
**F-75008 Paris (FR)**

Jouve, 18, rue St-Denis, 75001 Paris, France

## Description

On sait que la suspension élastique des véhicules terrestres est généralement assurée par quatre éléments élastiques principaux (ressorts) montés en parallèle avec quatre amortisseurs disposés entre une ou plusieurs structures porteuses de roues et une seconde structure accueillant la charge. Cette disposition présente l'inconvénient d'entraîner une fréquence propre de tangage généralement supérieure à la fréquence propre de suspension verticale. Le confort s'en trouve affecté, les variations d'accélération dues au mouvement de tangage étant généralement les plus importantes et les plus désagréables pour les passagers du véhicule.

La présente invention entend pallier cet inconvénient en proposant, dans un tel véhicule, un nouveau dispositif de suspension mettant en œuvre seulement deux ressorts principaux. Elle est principalement applicable à un véhicule, de préférence à deux places, dans lequel les variations de charges ne modifient pas (ou peu) la position du centre de gravité de l'ensemble suspendu du véhicule.

A cet effet, elle a pour objet un véhicule terrestre comportant des roues qui notamment définissent la direction de déplacement du véhicule, et une coque élastiquement attelée, par un dispositif de suspension comprenant des éléments élastiques, à un châssis rigide dont sont solidaires les roues.

Un véhicule de ce genre, connu par le brevet français n° 574 130, est en outre, selon l'invention, caractérisé par le fait que le dispositif de suspension comprend deux éléments élastiques principaux situés de part et d'autre du centre de gravité de la coque, sur un axe horizontal passant par ce point et perpendiculaire à la direction de déplacement du véhicule, et un troisième élément élastique, également attelé entre la coque et le châssis.

Les éléments élastiques principaux possèdent de préférence une raideur dans le sens vertical nettement inférieure à leur raideur dans les sens horizontaux.

Dans un mode de réalisation préféré, les organes élastiques principaux sont constitués par des ressorts auto-amortisseurs à compression hydrostatique d'élastomère.

Enfin, une application intéressante des dispositifs de l'invention concerne un véhicule dont la coque est pourvue par exemple de deux sièges frontaux, le centre de gravité de chacun d'eux étant, en charge, situé sensiblement sur l'axe horizontal susdit.

L'invention sera mieux comprise au cours de la description donnée ci-après à titre d'exemple purement indicatif et non limitatif qui permettra d'en dégager les avantages et les caractéristiques secondaires.

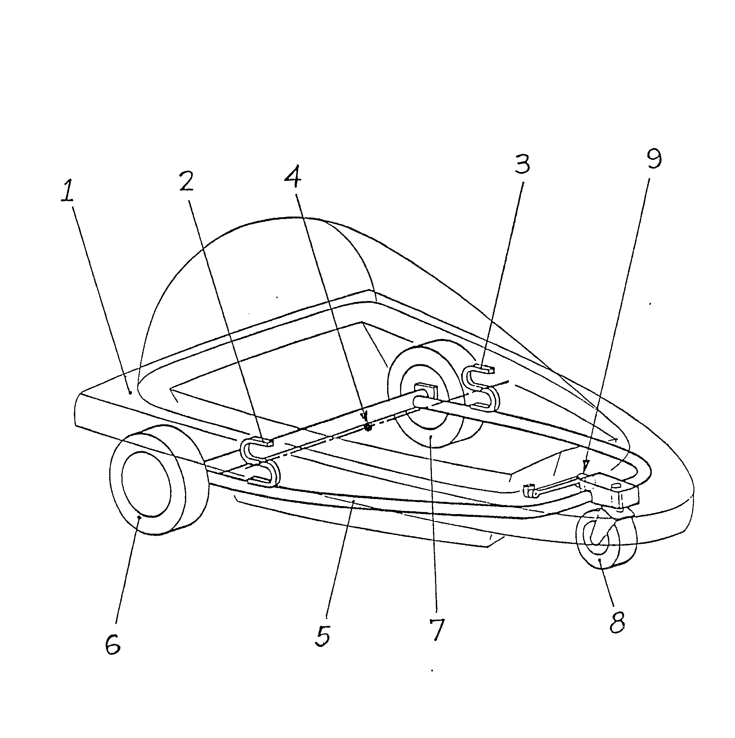

Il sera fait référence au dessin annexé qui représente schématiquement un véhicule conforme à l'invention. Ainsi en se reportant à cette figure on voit que l'on a réalisé l'invention en fixant, sur la coque 1 qui porte les passagers et la source d'énergie, deux organes élastiques identiques 2 et 3, de part et d'autre du centre de gravité 4 de cette coque, sur un axe horizontal perpendiculaire à la direction de déplacement du véhicule ; les deux organes 2 et 3 prennent appui sur un châssis rigide 5 qui rend solidaires les trois roues 6, 7 et 8, en l'occurrence, deux roues motrices latérales 6 et 7 à mouvement programmé et une roue librement orientable 8. A l'avant du véhicule, un troisième organe élastique 8 à faible réaction maintient la position de la coque 1 par rapport au châssis rigide 5 sans supporter de charge statique appréciable, ce troisième organe 9 se déformant facilement sous l'action des mouvements du châssis dus aux aspérités de la route.

Avec de telles dispositions, la position angulaire de la coque par rapport au châssis n'est modifiée, ni par les accélérations positives ou négatives du véhicule, ni par l'action des formes centrifuges dues aux virages. Dans le premier cas, les couples des roues sont uniquement appliqués au châssis non suspendu, et la composante horizontale des forces d'inertie se trouve dans le plan horizontal passant par les deux principaux ressorts. Dans le second cas, la force horizontale appliquée au centre de gravité est également transmise directement à la partie centrale des deux ressorts principaux, ces derniers n'étant pas déformés verticalement.

Les deux organes élastiques principaux 2 et 3 peuvent avantageusement être des ressorts auto-amortisseurs à compression hydrostatique d'élastomère, dont la réaction élastique unitaire verticale permet d'obtenir la fréquence de 1 à 2 hertz désirable, alors que les réactions élastiques unitaires suivant les directions longitudinale et transversale sont 3 à 8 fois plus élevées que la réaction élastique unitaire verticale.

De tels ressorts sont décrits dans le brevet français FR-A 2 349 067.

Dans une variante de l'invention non représentée, les deux organes élastiques principaux peuvent être constitués par des ressorts à boudin, la coque étant maintenue longitudinalement et transversalement par rapport au châssis au moyen d'une pièce à grande raideur élastique (par exemple une coulisse verticale) permettant des débattements verticaux libres à l'encontre du ressort. Un amortisseur classique est alors disposé en parallèle au ressort entre le châssis et la coque.

Le troisième organe élastique 9 doit être un ressort-amortisseur à faible réaction, par exemple un simple dispositif à compression et torsion de caoutchouc, puisqu'il ne supporte pratiquement aucune charge permanente susceptible d'entraîner le fluage du caoutchouc.

Le châssis rigide qui rend solidaires les roues du véhicule peut être constitué par un cadre trapézoïdal en tube d'acier cylindrique soudé ; si le véhicule ne comporte que trois roues, les efforts de torsion sont seulement ceux résultant des couples appliqués par les roues, ce qui permet une réalisation très légère.

La coque suspendue peut être en matériau plastique, même très déformable, car sa rigidité n'est pas nécessaire au positionnement correct des roues. De préférence, les sièges doivent être disposés de manière que le centre de gravité de chaque passager se trouve sensiblement sur l'axe transversal qui joint les deux ressorts principaux.

L'ensemble de ces dispositions permet d'obtenir par des moyens plus réduits que sur les véhicules habituels, une très bonne stabilité de la partie suspendue en même temps qu'une basse fréquence de tangage.

Elles permettent également d'obtenir une amélioration du confort ainsi qu'une réduction de poids et par conséquent de prix du véhicule, la réduction de poids résultant principalement de la suppression des efforts de torsion et de la réduction de la quantité d'énergie mécanique emmagasinée dans les ressorts.

Le véhicule peut être équipé de quatre roues dont deux motrices et deux librement orientables, et le troisième ressort peut être disposé à l'arrière ou plus généralement n'importe où entre la coque 1 et le châssis 5.

L'invention trouve une application intéressante dans le domaine de la construction automobile.

## Revendications

1. Véhicule terrestre comportant des roues (6, 7, 8) qui notamment définissent la direction de déplacement du véhicule, et une coque (1) élastiquement attelée, par un dispositif de suspension comprenant des éléments élastiques (2, 3), à un châssis rigide (5) dont sont solidaires les roues (6, 7, 8), caractérisé par le fait que le dispositif de suspension comprend deux éléments élastiques principaux (2, 3) situés de part et d'autre du centre de gravité (4) de la coque (1), sur un axe horizontal passant par ce point et perpendiculaire à la direction de déplacement du véhicule, et un troisième élément élastique (9), également attelé entre la coque (1) et le châssis (5).

2. Véhicule selon la revendication 1, caractérisé par le fait que les éléments élastiques principaux (2, 3) possèdent une raideur dans le sens vertical nettement inférieure à leur raideur dans les sens horizontaux.

3. Véhicule selon la revendication 1 ou 2, caractérisé par le fait qu'aux organes élastiques principaux (2, 3) est associé un amortisseur.

4. Véhicule selon l'une quelconque des revendications précédentes, caractérisé par le fait que les organes élastiques principaux (2, 3) sont constitués par des ressorts auto-amortisseurs à compression hydrostatique d'élastomère.

5. Véhicule selon l'une quelconque des revendications précédentes, caractérisé par le fait que la coque (1) est pourvue de sièges dont le centre de gravité en charge est situé sensiblement sur l'axe horizontal susdit.

## Claims

1. Land vehicle comprising wheels (6, 7, 8) which particularly define the direction of travelling of the vehicle, and a shell (1) elastically coupled, via a suspension device comprising elastic elements (2, 3) to a rigid chassis (5), to which the wheels (6, 7, 8) are connected, characterized by the fact that the suspension device comprises two main elastic elements (2, 3) situated on both sides of the center of gravity (4) of the shell (1), on a horizontal axis traversing this point and perpendicular to the direction of travelling of the vehicle, and a third elastic element (9), also coupled between the shell (1) and the chassis (5).

2. Vehicle according to claim 1, characterized by the fact that the main elastic elements (2,3) have a stiffness in the vertical direction which is clearly less than the stiffness in horizontal directions.

3. Vehicle according to claim 1 or 2, characterized by the fact that a shock absorber is associated to the main elastic members (2, 3).

4. Vehicle according to any one of the preceding claims, characterized by the fact that the main elastic members (2, 3) are constituted by self-damping springs with hydrostatic elastomer compression.

5. Vehicle according to any one of the preceding claims, characterized by the fact that the shell (1) is provided with seats whose center of gravity under load is substantially situated on said horizontal axis.

## Patentansprüche

1. Landfahrzeug mit insbesondere die Bewegungsrichtung des Fahrzeugs bestimmenden Rädern (6, 7, 8) und einer selbsttragenden Karosserie (1), die über eine elastische Elemente (2, 3) aufweisende Aufhängungsvorrichtung elastisch an einem starren Chassis (5), an dem die Räder (6, 7, 8) befestigt sind, aufgehangen ist, dadurch gekennzeichnet, daß die Aufhängungsvorrichtung zwei elastische Hauptelemente (2, 3), die zu beiden Seiten des Schwerpunkts (4) der Karosserie (1) auf einer horizontalen, durch den Schwerpunkt verlaufenden und zur Bewegungsrichtung des Fahrzeugs senkrechten Achse angeordnet sind, und ein drittes elastisches, ebenfalls zwischen der Karosserie (1) und dem Chassis (5) eingehangenes Element (9) aufweist.

2. Landfahrzeug nach Anspruch 1, dadurch gekennzeichnet, daß die elastischen Hauptelemente (2, 3) in vertikaler Richtung eine bedeutend kleinere Härte als in horizontaler Richtung haben.

3. Landfahrzeug nach einem der Ansprüche 1 oder 2, dadurch gekennzeichnet, daß mit den elastischen Hauptelementen (2, 3) Stoßdämpfer verbunden sind.

4. Landfahrzeug nach einem der vorstehenden Ansprüche, dadurch gekennzeichnet, daß die elastischen Hauptelemente (2, 3) selbstdämpfende Federn mit hydrostatischer Kompression eines Elastomers aufweisen.

5. Landfahrzeug nach einem der vorstehenden Ansprüche, dadurch gekennzeichnet, daß die Karosserie (1) mit Sitzen versehen ist, deren Schwerpunkt bei Beladung ungefähr auf der obengenannten horizontalen Achse liegt.